# EUROPEAN PATENT SPECIFICATION

(11) **EP 3 411 460 B1**
(45) Date of publication and mention of the grant of the patent: **11.12.2019**
(21) Application number: 17707691.6
(22) Date of filing: 18.01.2017
(51) Int. Cl.: C10K 1/00, C10K 1/04, C10K 1/18, B01D 47/10, B01D 47/12, B01D 47/06

(54) **METHOD FOR TREATMENT OF A HOT PYROLYSIS GAS**
VERFAHREN ZUR BEHANDLUNG EINES HEISSEN PYROLYSEGASES
PROCÉDÉ DE TRAITEMENT D'UN GAZ DE PYROLYSE CHAUD

(30) Priority: 05.02.2016 NL 2016229
(43) Date of publication of application: 12.12.2018
(73) Proprietor: Black Bear Carbon B.V., 6031 NL Nederweert (NL)
(72) Inventor: VERBERNE, Arnoldus Henricus Adrianus, 6031 NL Nederweert (NL); ENGELSMA, Ide Wieberen, 6031 NL Nederweert (NL); WIROKARSO, Dion, 6031 NL Nederweert (NL); TWIGG, Christopher Michael, 6031 NL Nederweert (NL)
(74) Representative: Algemeen Octrooi- en Merkenbureau B.V.
(86) International application number: PCT/NL2017/050028
(87) International publication number: WO 2017/135811

(56) References cited:
- GB-A- 1 519 090
- US-A- 3 349 546
- US-A- 3 618 296

## Description

The present invention relates to a method for treatment of a hot gas, for example a hot gas generated by a pyrolysis or a gasification process, such as a rotary kiln or entrained flow process.

International application WO2013/095145 relates to a method for recycling a scrap rubber, in particular tyres, which method comprises the following steps: i) pyrolyzing a scrap rubber to obtain a char material; ii) milling the char material obtained in step i) to obtain a carbon black powder. The pyrolysis in step i) comprises at least a two-stage pyrolysis process, namely a) a first pyrolysis stage to obtain an intermediate char material and b) a second pyrolysis stage to obtain a char material wherein at least one of the stages a) or b) is carried out in a rotary kiln. According to such a process a counter current flow of gases is applied in the rotary kiln during its operation. A counter current flow enables a char material to be produced with a low weight percentage of volatile compounds. The gases are drawn away from the product and so any volatile compounds that are made free during the pyrolysis step do not remain in contact with the char material and thus can not be reabsorbed by the char material thereby increasing the yield of the reduction of volatiles. This International application does not provide any information regarding the after treatment of gases produced in a pyrolysis process.

International application WO99/50374 relates to a process for pyrolyzing a plurality of tire chips comprising: passing the tire chips into an inclined rotary kiln, saturating the tire chips with a first oil stream in the inclined rotary kiln, pyrolyzing the tire chips continuously in the inclined rotary kiln by indirectly heating the tire chips, whereby the inclined rotary kiln rotates the tire chips within the first oil stream to allow for increased chemical interaction between the tire chips and the first oil stream to allow effective dissociation of the tire chips into a first vapor product and a solid product, processing the first vapor product to condense oil, recovering oil from the solid product and vapor product and recycling the oil into the inclined rotary kiln for saturating the tire chips and for recovering condensed oil from the first vapor product. Processing the first vapor product further comprises the steps of passing the first vapor product through a discharge hood of the inclined rotary kiln to a first condenser scrubber, spraying the first vapor product with cooled oil to condense a first oil product from the first vapor product, thereby leaving a second vapor product, passing the second vapor product through a second condenser scrubber, spraying the second vapor product with cooled oil to condense a second oil product from the second vapor product, thereby leaving a third vapor product, and using the third vapor product to fuel the engine to power the process.

GB 1 558 008 relates to a process for the separation of particulate matter from synthesis gas prepared by means of partial oxidation of oil and/or coal having a temperature in the range from 100 to 500 °C, the greater part of the particulate matter first being removed from the gas by means of at least one cyclone and the gas subsequently being scrubbed with water in at least two stages, in which process the aqueous suspension of particulate matter obtained in the first scrubbing stage is partly injected into the feed gas and partly recycled to the first scrubbing stage; the aqueous suspension of particulate matter obtained in each consecutive scrubbing stage is partly recycled to the said stage and partly to the preceding stage; and the aqueous suspension of the particulate matter which is recycled to the final scrubbing stage is first cooled.

US Patent No. 4,149,859 relates to a process for the separation of dry particulate matter from a hot gas containing molten slag droplets, comprising the steps of cooling the hot gas, separating the greater part of the particulate matter from the cooled gas, scrubbing the gas with water to form scrubbed gas and an aqueous suspension of particulate matter, thereafter treating the gas and forming a purified product gas from the scrubbed gas and injecting into the hot gas for effecting said cooling at least part of the aqueous suspension of particulate matter obtained in the step of scrubbing and part of the purified product gas.

Physical tar removal is generally achieved by means of electrostatic precipitators, rotating particle separators, cyclone separators, filters (either baffle, fabric or ceramic), or scrubbers (either water or organic liquid based). Many of these technologies are applied in combination with each other or with catalytic tar removal technologies as often they are not only removing tars, but also particulates like dust and non-tar components like NH₃.

US 3 349 546 relates to an apparatus for concentrating residual pulp liquor and for scrubbing chemical dust and fume from hot flue gases, and such an apparatus includes a first venturi scrubber unit including serially connected contact and separating zones, where a gas is contacted within the contact zone by a liquid medium for recovery of heat and the subsequent removal of entrained solids and liquid medium from the gaseous fluid in the separating zone. After leaving the first venturi scrubber unit the gas is passed through a second venturi scrubber unit where it is contacted by a different sprayed liquid and the mixture then separated into its liquid and gaseous components before the gaseous effluent is discharged to the atmosphere. The second venturi scrubber unit is intended to remove a major portion of the residual amounts of entrained solids in the gas, with the separated liquid from the second unit used in part as makeup liquid to the first venturi scrubber unit.

US 3 618 296 relates to a method of separating particulate carbon from synthesis gas produced by the partial oxidation of hydrocarbons at high pressure wherein carbon- containing synthesis gas at elevated temperature is contacted with aqueous fluid for separation of carbon therefrom which comprises accelerating a carbon-containing gas stream through the throat of a venturi, introducing into said accelerated gas stream in the throat of said venturi a stream of clear alkaline water and simultaneously a separate stream of an acidic carbon-water mixture produced subsequently in the process thereby scrubbing the particulate carbon from said gas stream and producing a washed gas stream, separating said washed gas stream from acidic carbon-water mixture in a gas-liquid separating zone, and recycling at least a portion of the acidic carbon-water mixture from the bottom of said gas-liquid separating zone to the throat of said venturi to wash said gas stream.

GB 1 51 9 090 relates to a continuous process for the production of fuel gas or synthesis gas by the partial oxidation of a hydrocarbonaceous fuel.

Electrostatic precipitators (ESPs) are widely used to remove fine solids and liquid droplets from gas streams. Although effective with liquid droplets, they prove inefficient when "tar" is in the gaseous phase. This means that, when the target is the "tar" removal, high-temperature operation should be avoided.

The rotating particle separator (RPS) uses a rotating cylinder, which is centred in a single cyclone. The RPS has been implemented for de-dusting of flue gas in combustion systems without associated tar and lead to research on tar removal via RPS as well. Research on tar removal with a (wet) RPS operated at a low temperature, at which water from the producer gas condensed, revealed that the filter element of the RPS blocked by in particular heavy tars within hours after start of the tests. Cleaning of the filter element by continuous water spray was not sufficient. Although RPS could effectively remove dust, tar aerosols and NH₃, the fouling issue with heavy tars caused the research on RPS to be stopped.

Cyclone filters or centrifugal force separators are also mechanical technologies that can potentially be used for tar removal. These technologies operate on the same principles as those for particulate removal, using centrifugal force to separate solids and aerosols from gases. The technologies are best suited for removing larger particles, typically those with diameters of 5 µm or greater. In practice, cyclones and related centrifugal separators are not used for tar removal in biomass gasification systems. The combination of particulates and sticky tar in the gas stream, however, creates a deposition of material on cyclone surfaces that is difficult to remove in normal operation. Even if particulates were removed prior to tar condensation, cyclones are ineffective at removing small-diameter tar aerosols that include material below 1 µm size.

Over the years filters of various types have been used in biomass gasification systems for tar removal. The tars are captured by impingement of condensed aerosols on the filter surface. In contrast to solid particulates like dust, tar is more difficult to remove from the filter surface as it exists in a high viscous sticky liquid form. These differences in characteristics make many filters less suitable for tar removal than for particulate removal.

The oil gas washing technology OLGA developed by ECN and Dahlman is based on a multiple stage scrubber in which the producer gas is cleaned by special scrubbing oil. In the first section of OLGA the gas is gently cooled down by the scrubbing oil. Heavy tars condense and are collected, after which they are separated from the scrubbing oil and can be recycled to the gasifier in order to serve as feedstock of the gasifier. In the second stage of OLGA (the absorber / stripper), lighter gaseous tars are absorbed by the scrubbing oil. The tar-laden oil is regenerated in a stripper. All heavy and light tars can be recycled to the gasifier where they are destructed and contribute to the energy efficiency. The packed columns are not suitable for a temperature shock, i.e. a sudden drop from a high temperature to a low temperature. In addition, the dust removal performance is rather low. Wet separators for fine dusts and aerosols of industrial emissions are also used in waste gas cleaning technology.

Electrostatic filters are based on separating charged particles in an electrostatic field. The particles are collected on so called plate curtains, where the formed particle layer is removed via dry or wet methods. A disadvantage of these electrostatic filters is the risk on explosions, due to the possible leakage of air into the system wherein a high voltage source is present.

US patent publication number US2011/173886 relates to a method for treatment of a hot crude gas generated by an entrained flow gasification system, wherein the hot crude gas is passed to desulfurization and to HCI removal, whereby subsequently, a partial stream is removed to form a quenching gas cooling stream, and after cooling, micro-dust removal, drying, and compression, passed back to the hot crude gas stream behind the entrained flow gasifier. The branched-off quenching gas stream is passed to the regenerated hot gas by way of a water quench, a Venturi scrubber, a crude gas cooling, an H₂O removal, and a crude gas compression.

The present inventors found that the pyrolysis gas to be treated can be seen as a complex mixture of components, namely dust particles, synthesis gas, hydrogen, carbon monoxide, carbon dioxide, C1-C6 alkanes, alkylenes and alkylenes, mono aromatics, benzene, toluene, xylenes (BTX), condensable oils, higher boiling aliphatic hydrocarbons, aromatics (mono, tri and di), tar components and water.

Such a hot pyrolysis gas has not only to be cooled, but the tar components and BTX have to be removed as well. But a step of cooling may result in the formation of sticky components. And the presence of hydrogen in the hot pyrolysis gas may result in the formation of an explosive gas mixture when oxygen is present as well. Thus the treatment of hot pyrolysis gas is a very complex process.

An object of the present invention is to provide a method for treatment of a hot gas, for example a hot gas generated by a pyrolysis or a gasification process, such as a rotary kiln or entrained flow process, in which method clogging of fine dust particles is prevented.

Another object of the present invention is to provide a method for treatment of a hot gas, for example a hot gas generated by a pyrolysis or a gasification process, such as a rotary kiln or entrained flow process, wherein high boiling components present in the hot gas, such as tar, can be removed or recovered.

Another object of the present invention is to provide a method for treatment of a hot gas, for example a hot gas generated by a pyrolysis or a gasification process, such as a rotary kiln or entrained flow process, wherein a clean off gas is produced that can be further processed, such as combustion (e.g. in an internal combustion engine, a turbine or a boiler) or catalytically treated (e.g. for the production of methane).

Another object of the present invention is to a method for treatment of a hot gas, for example a hot gas generated by a pyrolysis or a gasification process, such as a rotary kiln or entrained flow process, wherein the cooling of the hot gas occurs rapidly.

The present invention relates thus to a method for treatment of a hot gas generated by a pyrolysis or a gasification process, wherein
the hot gas is passed to a first unit for particle removal and cooling, whereby subsequently, a gaseous stream is removed from a first condensed stream thus obtained and passed to a second unit for particle removal and cooling, wherein a second condensed stream is obtained, said first condensed stream and second condensed stream being recycled to said first unit and said second unit, respectively, wherein said step of recycling comprises injecting in said first unit of said first condensed stream as small droplets in the stream of hot gas, wherein a liquid-to-gas ratio (L/G ratio) in said first unit is in a range of 10 - 40, said L/G ratio being expressed on mass basis (i.e. kg liquid per kg gas).

On basis of the present method one or more of the objects are achieved. The present inventors found that the construction of two or even more separate units for particle removal and cooling, placed in series, in the process for the treatment of a hot gas has resulted in an efficient removal of harmful components from the hot pyrolysis gas. In such a unit for particle removal and cooling the steps of cooling of the incoming gas flow and the removal of particles present in the incoming gas flow take place simultaneously. The present invention is not restricted to an embodiment of two separate units for particle removal and cooling placed in series, but the present invention also encompasses embodiments wherein two or more of these units for particle removal and cooling are placed in series. An example of a hot gas is a gas having a temperature higher than 200°C, for example higher than 250 °C or even higher than 400 °C.

In a preferred embodiment of the present process the first condensed stream is injected as small droplets in the stream of hot pyrolysis gas. Such an injection of the first condensed stream takes place in the in the first unit. Thus the first condensed stream is recycled to the first unit for particle removal and cooling.

In another preferred embodiment of the present process the second condensed stream is injected as small droplets in the gaseous stream originating from said first condensed stream. Such an injection of the second condensed stream takes place in the in the second unit. Thus the second condensed stream is recycled to the second unit for particle removal and cooling.

The present inventors found that a liquid-to-gas ratio (L/G ratio) in the first unit is in a range of 10 - 40, preferably 15 - 30, even more preferably 20 - 25, said L/G ratio being expressed on mass basis (i.e. kg liquid per kg gas). This high ratio has resulted in a situation wherein the high temperature of the gas entering the first unit is cooled substantially. The inventors assume that such a high ratio provides absorption of the high boiling point tar components, resulting in a transfer of these components from the gas phase into the liquid phase. The high ratio provides a direct exchange of heat between the condensed stream and the incoming hot gasses. An increase in the separation rate with increasing scrubbing liquid-to-gas ratio is likewise a product of the enlarged interfacial surface between gaseous and liquid phase.

The present inventors also found that the liquid-to-gas ratio (L/G ratio) in the second unit is preferably in a range of 20 - 60, preferably 30 - 50, even more preferably 35 - 45, said L/G ratio being expressed on mass basis (i.e. kg liquid per kg gas).The present inventors found that the separation rate increases as the velocity of the gas in the throat, known as the throat velocity, increases. This increase is due to the increase in relative velocity between the gas or, as the case may be, particles to be separated, and the scrubbing liquid and to the formation of larger interfacial surfaces between the gaseous and liquid phases.

The aforementioned liquid-to-gas ratios (L/G ratio) in both the first unit and the second unit have not been disclosed nor suggested in any of cited art, especially International application WO99/50374 (see Figure 4), GB 1 558 008 (see Example) and US Patent No. 4,149,859 (see Example) as discussed before.

In order to have a good separation between the gaseous components and the liquid components present in the effluent originating from the first unit for particle removal and cooling the present inventors found that the effluent from said first unit for particle removal and cooling is preferably passed to a first knock-out vessel, from which first knockout vessel said gaseous stream is separated from said first condensed stream. In such a knockout vessel the pressure and temperature conditions are such that there are equilibrium conditions resulting in separation between a first condensed stream and a gaseous stream. The temperature of the gaseous stream from the first knockout vessel is at most 90 °C, preferably at most 80 °C, even more preferably at most 70 °C.

In order to achieve sufficient cooling capacity in the first unit for particle removal and cooling it is preferred to cool the first condensed stream before recycling the first condensed stream to the first unit for particle removal and cooling. This means that the condensed stream from the first knockout vessel is sent through a heat exchanger and the thus cooled stream is sent to the first unit for particle removal and cooling wherein the contact between the hot gas and the rather cold stream takes place. The step of cooling of the first condensed stream results in a stream having a temperature in a range of 10 - 70 °C. The temperature of the effluent from the first unit for particle removal and cooling is preferably at most 90 °C, preferably at most 80 °C, even more preferably at most 70 °C.

The gaseous stream from the first knockout vessel is lead into the second unit for particle removal and cooling, wherein the effluent from the second unit for particle removal and cooling is passed to a second knock-out vessel, from which second knockout vessel a gaseous stream is separated from said second condensed stream. In order to achieve sufficient cooling capacity in the second unit for particle removal and cooling it is preferred that the second condensed stream is cooled before it is recycled to the second unit for particle removal and cooling.

In order to prevent agglomeration and accumulation of small sized particles a first purge stream is withdrawn from the first condensed stream. Such a purge stream is not recycled to the first unit for particle removal and cooling. For the same reason a second purge stream is also preferably withdrawn from the second condensed stream. And such a purge stream is not recycled to the second unit, too.

In a preferred embodiment both first and second purge streams are combined and used for further processes.

The first and second unit for particle removal and cooling are preferably of the type venturi scrubber. A venturi scrubber consists basically of three sections: a converging section, a throat section, and a diverging section. The inlet gas stream enters the converging section and, as the area decreases, gas velocity increases (in accordance with the Bernoulli equation). Liquid is introduced either at the throat or at the entrance to the converging section. The inlet gas, forced to move at extremely high velocities in the small throat section, shears the liquid from its walls, producing an enormous number of very tiny droplets. Particle and gas removal occur in the diverging section as the inlet gas stream mixes with the fog of tiny liquid droplets. The inlet stream then exits through the diverging section, where it is forced to slow down. Thus the venturi scrubber has a flow channel along a longitudinal axis and defined in sequence by a confuser, i.e. a converging section, a throat and a diffuser, i.e. a diverging section. Nozzles configured for injecting a scrubbing liquid into the venturi scrubber may be present in a wall surrounding the throat or at the entrance to the converging section, or a combination thereof.

Viewed in the flow direction of a gas stream requiring to be cleaned (and hence in the direction of its longitudinal axis, since a gas stream usually flows in the direction of the longitudinal axis of the venturi scrubber because the flow channel of the venturi scrubber extends along the longitudinal axis), a venturi scrubber comprises, in sequential order, a confuser, i.e. a converging section, a throat and a diffuser, i.e. a diverging section. The throat is a constriction of the flow channel. An entering dust-laden gas stream is accelerated in the confuser of the flow channel and attains its highest velocity in the narrowest cross-section of the flow channel, the throat. In the throat, a scrubbing liquid is injected as a jet perpendicularly to the flow direction of the gas stream requiring to be cleaned in a technique also known as lateral injection. The injection is by a plurality of nozzles. These are implemented for example as small nozzle apertures which are arranged adjacent to one another in a plane at right angles to the longitudinal axis of the flow channel, also known as the injection plane. In the succeeding diffuser, kinetic energy of the gas stream is converted back into pressure energy again. The impact force of the gas causes the scrubbing liquid to be atomized into ultrafine droplets in the throat.

For temperature reduction purposes, i.e. a fast cooling of the hot pyrolysis gasses, and for separation purposes, i.e. the condensation of hot boiling components from the hot pyrolysis gasses, it is preferred that the width of the throat of the first venturi scrubber is larger than the width of the throat of the second venturi scrubber.

For both first and second unit for particle removal and cooling, i.e. first venturi scrubber and second venturi scrubber, the velocity of the flow of the gas in the throat is at least 40 m/s.

In the first venturi scrubber the velocity of the flow at the entrance is about 10 - 20 m/s and will be increased to a value of at least 40 m/s. The present inventors noticed that due to condensation of the high boiling components the velocity of the flow will decrease to a value of about 30 m/s at the exit of the venturi scrubber, i.e. at the exit of the throat section and the entry of the diverging section. After leaving the venturi scrubber the velocity of the gas will be around 10 m/s.

In the second venturi scrubber there is a somewhat different velocity profile of the gas flow. The velocity of the flow at the entrance is about 10 - 20 m/s and will be increased to a value of at least 40 m/s. Since there are less high boiling components present in the incoming gas flow, compared to the composition of the incoming gas flow of the first venturi scrubber, the condensation effects on the reduction of the velocity of the gas flow will be less, resulting in a velocity of the gas flow at the exit of the venturi scrubber, i.e. at the exit of the throat section and the entry of the diverging section, of about > 35 m/s.

The angle of the taperingly shaped confuser, i.e. the converging section, for both the first and second venturi scrubber is preferably in a range of 35 - 60 degrees.

The angle of the nozzles for both the first and second venturi scrubber is preferably in a range of 10 - 20 degrees.

The angle of the taperingly shaped diffuser, i.e. the diverging section, for both the first and second venturi scrubber is preferably in a range of 10 - 20 degrees.

The present description includes a system for implementing the method as discussed above, wherein a first venturi scrubber follows the oven in series, in the flow path of the hot gas leaving said oven, followed by a first gas-liquid separation, whereby behind the first gas-liquid separation, a first condensed stream is recycled back to the first venturi scrubber, a gaseous stream is sent to a second venturi scrubber, followed by a second gas-liquid separation, whereby behind the second gas-liquid separation, a second condensed stream is recycled back to the second venturi scrubber.

The present invention is explained in more detail below with reference to schematic exemplary figures relating to exemplary embodiment variants of the invention.
Figure 1 shows a process flow diagram of the present method.
Figure 2 is a general schematic diagram of a venturi scrubber.

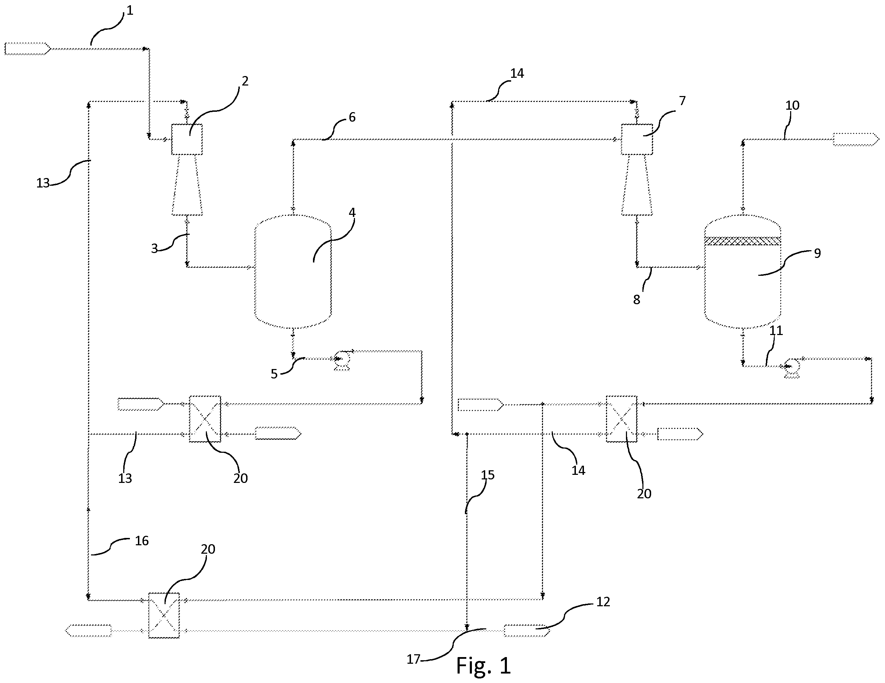

In Figure 1 the method for treatment of a hot gas generated by an entrained flow gasification system is indicated by reference number 100. Hot pyrolysis gas 1, e.g. above a temperature of 400 °C, originating from a pyrolysis process for recycling a scrap rubber, in particular tyres, as disclosed in International application WO13/095145, is sent to a first venturi scrubber 2. First venturi scrubber 2 is provided with nozzles (not shown here) for injecting a scrubbing liquid into the throat of first venturi scrubber 2. The scrubbing liquid entering first venturi scrubber 2 is here first condensed stream 13. The effluent 3 from first venturi scrubber 2 comprising a gas-liquid phase is sent to a first knock-out vessel 4. In first knock-out vessel 4 a separation between a gaseous phase 6 and a liquid phase 5 takes place by means of gravimetric separation. Liquid phase 5, i.e. the condensate fraction of effluent 3, is returned to the inlet of first venturi scrubber 2. In the process flow diagram shown here liquid phase 5 is cooled in heat exchanger 20 and the thus cooled first condensed stream 13 is injected via nozzles in first venturi scrubber 2. A purge stream 16 is withdrawn from first condensed stream 13. The inlet of the first venturi is vapor, the inlet of the second venturi is also a vapour and the outlet of the first venturi is a gas. One can say that a gas refers to a substance that has a single defined thermodynamic state at a certain temperature whereas a vapor refers to a substance that is a mixture of two phases at a certain temperature, for example room temperature, namely gaseous and liquid phase.

The gaseous phase 6 formed in first knock-out vessel 4 is sent to a second venturi scrubber 7. Second venturi scrubber 7 is provided with nozzles (not shown here) for injecting a scrubbing liquid into the throat of second venturi scrubber 7. The scrubbing liquid 14 entering second venturi scrubber 7 originates from second condensed stream 11. The effluent 8 from second venturi scrubber 7 comprising a gas-liquid phase is sent to a second knock-out vessel 9. In second knock-out vessel 9 a separation between a gaseous phase 10 and a liquid phase 11 takes place. Liquid phase 11, i.e. the condensed fraction of effluent 8, is returned to the inlet of second venturi scrubber 7. In the process flow diagram shown here liquid phase 11 is cooled in heat exchanger 20 and the thus cooled second condensed stream 14 is injected via nozzles in second venturi scrubber 7. A purge stream 15 is withdrawn from second condensed stream 14. In figure 1 all heat exchangers 20 are supplied with a heat exchanging medium. In addition, in some embodiments heat exchangers 20 are interconnected.

According to the process flow diagram shown here purge stream 15 and purge stream 16 are combined as stream 17 for further use in unit 12.

From the process flow diagram shown here it is clear that there is no exchange between the scrubbing liquids 13 and 14. In other words, second condensed stream 14 is recycled to second venturi scrubber 7, first condensed stream 13 is recycled to first venturi scrubber 2.

During the start-up phase of the method for treatment of a hot gas generated by a pyrolysis or gasification process a phase comprising a low boiling oil with a small fraction of high boiling oil is present in both first knock-out vessel 4 and second knock-out vessel 9. This composition is used as the scrubbing liquid in the venturi scrubbers 3, 7. After some time the composition will be withdrawn from the system as stream 17. Second knock-out vessel 9 is preferably provided with a demister as shown in Figure 1.

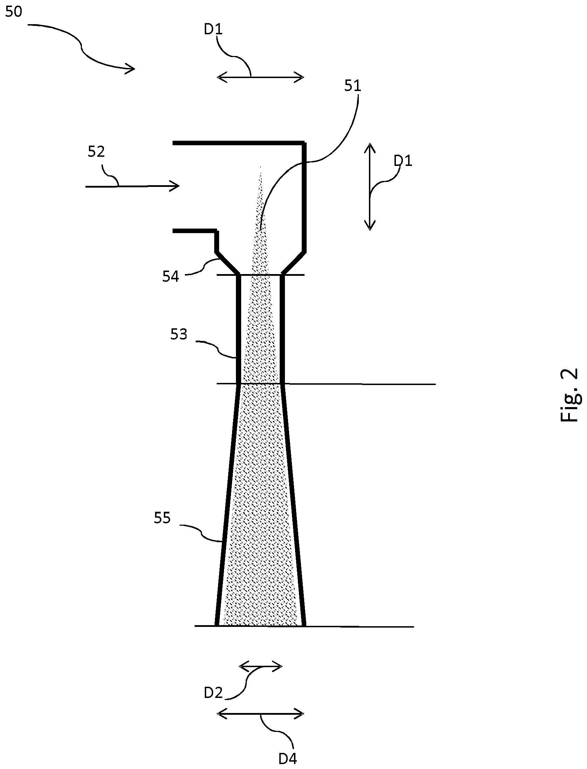

In Figure 2 a venturi scrubber 50 is shown. Venturi scrubber 50 comprises, in sequential order, a confuser 54, i.e. a converging section, a throat section 53 and a diffuser 55, i.e. a diverging section. The hot gas inlet 52 enters venturi scrubber 50 at the top where nozzles 51 are located. Nozzles 51 eject a scrubbing liquid into the hot gas entering the top portion of venturi scrubber 50. The inlet gas stream enters converging section 54 and, as the area decreases, gas velocity increases. The inlet gas, forced to move at extremely high velocities in the small throat section 53 may shear the liquid from its walls, producing an enormous number of very tiny droplets. Due to the contraction of the annular vapor space available mixing is forced and intensified. The present inventors assume that breakup of the droplets is created by the nozzle in conjunction with the gas flow. Particle and mist removal occur in the diverging section 55 as the inlet gas stream mixes with the fog of tiny liquid droplets. The inlet stream then exits through the diverging section 55, where it is forced to slow down. In Figure 2 the diameter of throat is indicated as D2, the outlet diameter of the venturi scrubber as D4, the inlet diameter of the venturi scrubber as D1. In an embodiment the diameter of throat section 53 is constant over its length. For an optimal design of such venturi scrubber the following equations are preferably valid D4 > D1 and D2 < D1.

## Claims

1. A method for treatment of a hot gas generated by a pyrolysis or a gasification process, wherein
the hot gas is passed to a first unit for particle removal and cooling, whereby subsequently, a gaseous stream is removed from a first condensed stream thus obtained and passed to a second unit for particle removal and cooling, wherein a second condensed stream is obtained, said first condensed stream and second condensed stream being recycled to said first unit and said second unit, respectively, wherein said step of recycling comprises injecting, in said first unit, said first condensed stream as small droplets in the stream of hot gas, wherein a liquid-to-gas ratio (L/G ratio) in said first unit is in a range of 10 - 40, said L/G ratio being expressed on mass basis (i.e. kg liquid per kg gas).

2. Method according to claim 1, wherein said liquid-to-gas ratio (L/G ratio) in said first unit is in a range of 15-30, preferably 20-25, said L/G ratio being expressed on mass basis (i.e. kg liquid per kg gas).

3. Method according to claim 1, wherein said step of recycling comprises injecting in said second unit of said second condensed stream as small droplets in the gaseous stream originating from said first condensed stream, wherein especially a liquid-to-gas ratio (L/G ratio) in said second unit is in a range of 20-60, preferably 30-50, even more preferably 35-45, said L/G ratio being expressed on mass basis (i.e. kg liquid per kg gas).

4. Method according to any one of the preceding claims, wherein the effluent from said first unit for particle removal and cooling is passed to a first knock-out vessel, from which first knockout vessel said gaseous stream is removed from said first condensed stream.

5. Method according to claim 4, wherein the temperature of said effluent from said first unit for particle removal and cooling is at most 90 °C, preferably at most 80 °C, even more preferably at most 70 °C.

6. Method according to claim 4, wherein the temperature of said gaseous stream from said first knockout vessel is at most 90 °C, preferably at most 80 °C, even more preferably at most 70 °C.

7. Method according to any one of the preceding claims, wherein said first condensed stream is cooled before said step of recycling said first condensed stream to said first unit for particle removal and cooling, wherein said step of cooling said first condensed stream preferably results in a stream having a temperature in a range of 10- 70 °C.

8. Method according to any one of the preceding claims, wherein the effluent from said second unit for particle removal and cooling is passed to a second knock-out vessel, from which second knockout vessel a gaseous stream is removed from said second condensed stream, wherein said second condensed stream is preferably cooled before said step of recycling said second condensed stream to said second unit for particle removal and cooling.

9. Method according to any one of the preceding claims, wherein a first purge stream is withdrawn from said first condensed stream, said purge stream not being recycled to said first unit.

10. Method according to any one of the preceding claims, wherein a second purge stream is withdrawn from said second condensed stream, said purge stream not being recycled to said second unit.

11. Method according to any one of the preceding claims, wherein said first and second unit for particle removal and cooling are of the type venturi scrubber, said venturi scrubber having a flow channel along a longitudinal axis and defined in sequence by a converging section, a throat section, and a diverging section, wherein nozzles configured for injecting a scrubbing liquid into said venturi scrubber are present in a wall surrounding said throat section or at the entrance to the converging section, or a combination thereof.

12. Method according to claim 11, wherein the width of the throat section of the first venturi scrubber is larger than the width of the throat section of the second venturi scrubber.

13. Method according to any one of the claims 11-12, wherein the flow rate of the gas in the throat section is at least 40 m/s.

14. Method according to any one of the claims 11-13, wherein the angle of the taperingly shaped converging section is in a range of 35 - 60 degrees, wherein the angle of the nozzles is preferably in a range of 10 - 20 degrees, wherein the angle of the taperingly shaped diverging section is preferably in a range of 10 - 20 degrees.

## Patentansprüche

1. Ein Verfahren zur Behandlung eines Heißgases, das durch Pyrolyse oder einen Vergasungsvorgang erzeugt worden ist, wobei:
- das Heißgas in eine erste Einheit zum Entfernen von Partikeln und zum Abkühlen geleitet wird, wobei anschließend ein Gasstrom aus einem so erhaltenen ersten kondensierten Strom entfernt und in eine zweite Einheit zum Entfernen von Partikeln und zum Abkühlen geleitet wird, wodurch ein zweiter kondensierter Strom erhalten wird, wobei dieser erste kondensierte Strom und zweite kondensierte Strom in diese erste Einheit bzw. diese zweite Einheit zurückgeleitet wird, wobei dieser Schritt des Zurückleitens das Eindüsen dieses ersten kondensierten Stroms als kleine Tröpfchen in den Heißgasstrom in dieser ersten Einheit umfasst, wobei das Flüssigkeits/Gas-Verhältnis (F/G-Verhältnis) in dieser ersten Einheit innerhalb eines Bereichs von 10 bis 40 liegt und dieses F/G-Verhältnis auf Massenbasis (d.h. kg Flüssigkeit pro kg Gas) angegeben ist.

2. Verfahren nach Anspruch 1, wobei das Flüssigkeits/Gas-Verhältnis (F/G-Verhältnis) in der ersten Einheit innerhalb eines Bereichs von 15 bis 30 und vorzugsweise 20 bis 25 liegt und dieses F/G-Verhältnis auf Massenbasis (d.h. kg Flüssigkeit pro kg Gas) angegeben ist.

3. Verfahren nach Anspruch 1, wobei der Schritt des Zurückleitens das Eindüsen des zweiten kondensierten Stroms als kleine Tröpfchen in den Gasstrom, der aus dem ersten kondensierten Strom stammt, in der zweiten Einheit umfasst, wobei das Flüssigkeits/Gas-Verhältnis (F/G-Verhältnis) in dieser zweiten Einheit innerhalb eines Bereichs von insbesondere 20 bis 60, vorzugsweise 30 bis 50, und noch mehr bevorzugt 35 bis 45 liegt und dieses F/G-Verhältnis auf Massenbasis (d.h. kg Flüssigkeit pro kg Gas) angegeben ist.

4. Verfahren nach einem der vorhergehenden Ansprüche, wobei der Abstrom aus der ersten Einheit zum Entfernen von Partikeln und zum Abkühlen in einen ersten Tröpfchenabscheider geleitet wird, von welchem ersten Tröpfchenabscheider der Gasstrom aus dem ersten kondensierten Strom entfernt wird.

5. Verfahren nach Anspruch 4, wobei die Temperatur des Abstroms aus der ersten Einheit zum Entfernen von Partikeln und zum Abkühlen höchstens 90 °C, vorzugsweise höchstens 80 °C, und noch mehr bevorzugt höchstens 70 °C beträgt.

6. Verfahren nach Anspruch 4, wobei die Temperatur des Gastroms aus dem ersten Tröpfchenabscheider höchstens 90 °C, vorzugsweise höchstens 80 °C, und noch mehr bevorzugt höchstens 70 °C beträgt.

7. Verfahren nach einem der vorhergehenden Ansprüche, wobei der erste kondensierte Strom vor dem Schritt des Zurückleitens dieses ersten kondensierten Stroms in die erste Einheit zum Entfernen von Partikeln und zum Abkühlen abgekühlt wird, wobei dieser Schritt des Abkühlens dieses ersten kondensierten Stroms vorzugsweise in einem Strom mit einer Temperatur innerhalb eines Bereichs von 10 bis 70 °C resultiert.

8. Verfahren nach einem der vorhergehenden Ansprüche, wobei der Abstrom aus der zweiten Einheit zum Entfernen von Partikeln und zum Abkühlen in einen zweiten Tröpfchenabscheider geleitet wird, von welchem zweiten Tröpfchenabscheider ein Gasstrom aus diesem zweiten kondensierten Strom entfernt wird, wobei dieser zweite kondensierte Strom vorzugsweise vor dem Schritt des Zurückleitens dieses zweiten kondensierten Stroms in diese zweite Einheit zum Entfernen von Partikeln und zum Abkühlen abgekühlt wird.

9. Verfahren nach einem der vorhergehenden Ansprüche, wobei ein erster Spülstrom aus dem ersten kondensierten Strom abgezogen wird, wobei dieser Spülstrom nicht in die erste Einheit zurückgeleitet wird.

10. Verfahren nach einem der vorhergehenden Ansprüche, wobei ein zweiter Spülstrom aus dem zweiten kondensierten Strom abgezogen wird, wobei dieser Spülstrom nicht in die zweite Einheit zurückgeleitet wird.

11. Verfahren nach einem der vorhergehenden Ansprüche, wobei die erste und die zweite Einheit zum Entfernen von Partikeln und zum Abkühlen vom Typ eines Venturi-Wäschers sind, wobei dieser Venturi-Wäscher einen Strömungskanal entlang einer Längsachse besitzt und in einer Abfolge durch einen konvergenten Teil, eine Venturikehle und einen divergenten Teil definiert ist, wobei Düsen, die für das Eindüsen einer Waschflüssigkeit in den Venturi-Wäscher gestaltet sind, in einer die Venturikehle umgebenden Wandung, im Eingang zu dem konvergenten Teil oder in einer Kombination davon vorhanden sind.

12. Verfahren nach Anspruch 11, wobei die Breite der Venturikehle des ersten Venturi-Wäschers größer als die Breite der Venturikehle des zweiten Venturi-Wäschers ist.

13. Verfahren nach einem der Ansprüche 11 bis 12, wobei die Strömungsgeschwindigkeit des Gases in der Venturikehle mindestens 40 m/s beträgt.

14. Verfahren nach einem der Ansprüche 11 bis 13, wobei der Winkel des sich verjüngend geformten konvergenten Teils innerhalb eines Bereichs von 35 bis 60 Grad liegt, wobei der Winkel der Düsen vorzugsweise innerhalb eines Bereichs von 10 bis 20 Grad liegt, und der Winkel des sich erweiternd geformten divergenten Teils vorzugsweise innerhalb eines Bereichs von 10 bis 20 Grad liegt.

## Revendications

1. Procédé de traitement d'un gaz chaud généré par un procédé de pyrolyse ou de gazéification, dans lequel
le gaz chaud est amené à passer dans une première unité d'élimination de particules et de refroidissement, moyennant quoi par la suite, un flux gazeux est éliminé d'un premier flux condensé ainsi obtenu et amené à passer dans une deuxième unité d'élimination de particules et de refroidissement, où un deuxième flux condensé est obtenu, lesdits premier flux condensé et deuxième flux condensé étant recyclés vers lesdites première unité et deuxième unité, respectivement, dans lequel ladite étape de recyclage comprend l'injection, dans ladite première unité, dudit premier flux condensé sous forme de petites gouttelettes dans le flux de gaz chaud, où un rapport liquide sur gaz (rapport L/G) dans ladite première unité se trouve dans une plage allant de 10 à 40, ledit rapport L/G étant exprimé en masse (c'est-à-dire kg de liquide par kg de gaz).

2. Procédé selon la revendication 1, dans lequel ledit rapport liquide sur gaz (rapport L/G) dans ladite première unité se trouve dans une plage allant de 15 à 30, de préférence de 20 à 25, ledit rapport L/G étant exprimé en masse (c'est-à-dire kg de liquide par kg de gaz).

3. Procédé selon la revendication 1, dans lequel ladite étape de recyclage comprend l'injection dans ladite deuxième unité dudit deuxième flux condensé sous forme de petites gouttelettes dans le flux gazeux provenant dudit premier flux condensé, dans lequel notamment un rapport liquide sur gaz (rapport L/G) dans ladite deuxième unité se trouve dans une plage allant de 20 à 60, de préférence de 30 à 50, de préférence encore de 35 à 45, ledit rapport L/G étant exprimé en masse (c'est-à-dire kg de liquide par kg de gaz).

4. Procédé selon l'une quelconque des revendications précédentes, dans lequel l'effluent provenant de ladite première unité d'élimination de particules et de refroidissement est amené à passer dans un premier récipient de séparation, à partir duquel premier récipient de séparation ledit flux gazeux est éliminé dudit premier flux condensé.

5. Procédé selon la revendication 4, dans lequel la température dudit effluent provenant de ladite première unité d'élimination de particules et de refroidissement est d'au plus 90°C, de préférence d'au plus 80°C, de préférence encore d'au plus 70°C.

6. Procédé selon la revendication 4, dans lequel la température dudit flux gazeux provenant dudit premier récipient de séparation est d'au plus 90°C, de préférence d'au plus 80°C, de préférence encore d'au plus 70°C.

7. Procédé selon l'une quelconque des revendications précédentes, dans lequel ledit premier flux condensé est refroidi avant ladite étape de recyclage dudit premier flux condensé vers ladite première unité d'élimination de particules et de refroidissement, dans lequel ladite étape de refroidissement dudit premier flux condensé conduit de préférence à un flux ayant une température se trouvant dans une plage allant de 10 à 70°C.

8. Procédé selon l'une quelconque des revendications précédentes, dans lequel l'effluent provenant de ladite deuxième unité d'élimination de particules et de refroidissement est amené à passer dans un deuxième récipient de séparation, à partir duquel deuxième récipient de séparation un flux gazeux est éliminé dudit deuxième flux condensé, dans lequel ledit deuxième flux condensé est de préférence refroidi avant ladite étape de recyclage dudit deuxième flux condensé vers ladite deuxième unité d'élimination de particules et de refroidissement.

9. Procédé selon l'une quelconque des revendications précédentes, dans lequel un premier flux de purge est retiré dudit premier flux condensé, ledit flux de purge n'étant pas recyclé vers ladite première unité.

10. Procédé selon l'une quelconque des revendications précédentes, dans lequel un deuxième flux de purge est retiré dudit deuxième flux condensé, ledit flux de purge n'étant pas recyclé vers ladite deuxième unité.

11. Procédé selon l'une quelconque des revendications précédentes, dans lequel lesdites première et deuxième unités d'élimination de particules et de refroidissement sont du type laveur à venturi, ledit laveur à venturi ayant un canal d'écoulement le long d'un axe longitudinal et défini en séquence par une section convergente, une section gorge et une section divergente, dans lequel des buses configurées pour injecter un liquide de lavage dans ledit laveur à venturi sont présentes dans une paroi entourant ladite section gorge ou à l'entrée de la section convergente, ou une combinaison de celles-ci.

12. Procédé selon la revendication 11, dans lequel la largeur de la section gorge du premier laveur à venturi est supérieure à la largeur de la section gorge du deuxième laveur à venturi.

13. Procédé selon l'une quelconque des revendications 11 et 12, dans lequel le débit du gaz dans la section gorge est d'au moins 40 m/s.

14. Procédé selon l'une quelconque des revendications 11 à 13, dans lequel l'angle de la section convergente de forme effilée se trouve dans une plage allant de 35 à 60 degrés, dans lequel l'angle des buses se trouve de préférence dans une plage allant de 10 à 20 degrés, dans lequel l'angle de la section divergente de forme effilée se trouve de préférence dans une plage allant de 10 à 20 degrés.
